(19)

Europäisches
Patentamt
European
Patent Office
Office européen
des brevets

(11) **EP 4 310 783 A1**

(12) **EUROPEAN PATENT APPLICATION**

(43) Date of publication:
**24.01.2024 Bulletin 2024/04**

(21) Application number: **22186307.9**

(22) Date of filing: **21.07.2022**

(51) International Patent Classification (IPC):
**G06T 7/50** *(2017.01)* **G06T 7/73** *(2017.01)*

(52) Cooperative Patent Classification (CPC):
**G06T 7/73; G06T 7/50;** G06T 2207/20081;
G06T 2207/20084; G06T 2207/30196;
G06T 2207/30221

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **The Provost, Fellows, Scholars and
other
Members of Board of Trinity College Dublin
Dublin 2 (IE)**

(72) Inventor: **The designation of the inventor has not
yet been filed**

(74) Representative: **Purdylucey Intellectual Property
6-7 Harcourt Terrace
D02 FH73 Dublin 2 (IE)**

(54) **TRANSFORMER BASED NEURAL NETWORK FOR 3D HUMAN POSE ESTIMATION**

(57) Disclosed is a transformer based neural network architecture for estimating a 3D pose from a 2D pose, that includes a joint embedding mechanism for receiving a plurality of 2D joint positions, setting each 2D joint position as a token, and increasing a dimension of each token to a predefined higher dimension. The transformer based neural network architecture further includes a joint transformer communicatively coupled to the joint embedding mechanism, for predicting a plurality of intermediate 3D joints, and a corresponding plurality of prediction errors, from corresponding plurality of tokens of the increased dimension, and a refinement transformer for estimating a plurality of final 3D joints based on the plurality of intermediate 3D joints, and corresponding plurality of prediction errors, wherein the plurality of final 3D joints is concatenated to generate the 3D pose.

FIG.1A

**Description**

**Field**

The present disclosure relates to image processing, and more particularly to 3D human pose estimation from a single image frame using transformer based neural networks.

**Background**

Movement analysis is vitally important for applications including mixed reality, human-computer interaction, sports biomechanics and physiotherapy. However, human motion is highly complex and subjective, and the high dimensionality and the variation between subjects means that much is still not understood. While motion capture systems have been used to quantify movement since the 1980s, the equipment is expensive, the datasets are largely constrained to laboratory settings and relatively few are publicly available. At the same time, the internet has collected vast amounts of in-the-wild (unlabelled and unconstrained) images and videos of moving humans. The maturation of monocular 3D human pose estimation (HPE) technologies has the potential to create a step increase in data available and scenarios that can be assessed, which can ultimately be used to improve the understanding of human movement.

Monocular 3D human pose estimation technologies have the potential to greatly increase the availability of human movement data. The best-performing models for single- image 2D-3D lifting use graph convolutional networks (GCNs) that typically require some manual input to define the relationships between different body joints.

Monocular 3D human pose estimation involves the prediction of 3D joint positions from a single viewpoint. While video techniques can leverage temporal information to improve accuracy, single-image estimators remain useful in their own right. For example, useful information about human movement can be learned from online image datasets or video datasets with low frame rate. Furthermore, some video approaches opt to use a combination of single-frame spatial models along with a multi-frame temporal model. Thus, strong single-image 3D pose lifters can also improve the performance on video data. Direct estimation techniques aim to estimate 3D human pose directly from images. However, diverse image datasets with 3D pose labels are sparse, and it is convenient to leverage the high accuracy of off-the-shelf 2D pose estimators that are well-suited for the pixel processing task. The lifting approaches predict the 3D pose from 2D joint predictions provided from such estimators. The types of neural network architectures used to learn this mapping have progressively evolved. The original simple baseline for pose lifting used a multi-layer perceptron to achieve surprising accuracy, even without information from image features. More recent works have highlighted that treating pose as a vector ignores the spatial relationships between joints, and that graph structures may be better-suited. However, existing works on graph convolutions require a hand-crafted adjacency matrix to define the relationship between nodes. Also, standard graph convolutions model the relationships between neighbouring joints with a shared weight matrix, which is sub-optimal for modelling articulated bodies since the relations between different body joints may be different. Furthermore, stacking GCN layers may result in over-smoothing.

Hence, in view of the above, there is a need for a system and method for efficiently estimating 3D human pose from a single frame, without manually encoding the relationship between human joints.

**SUMMARY OF INVENTION**

In an aspect of the present invention, there is provided a transformer based neural network architecture for estimating a 3D pose from a 2D pose. The transformer based neural network architecture includes_a joint embedding mechanism for receiving a plurality of 2D joint positions, setting each 2D joint position as a token, and increasing a dimension of each token to a predefined higher dimension, a joint transformer communicatively coupled to the joint embedding mechanism, for predicting a plurality of intermediate 3D joints, and a corresponding plurality of prediction errors, from corresponding plurality of tokens of the increased dimension, and a refinement transformer for estimating a plurality of final 3D joints based on the plurality of intermediate 3D joints, and corresponding plurality of prediction errors, wherein the plurality of final 3D joints is concatenated to generate the 3D pose.

In an embodiment of the present invention, the joint transformer comprises a plurality of transformer layers connected in series, and each transformer layer comprises: a transformer encoder for generating a plurality of pre-intermediate joints, and an intermediate supervision block connected in series with the transformer encoder for generating a plurality of pre-intermediate 3D joints, and corresponding plurality of intermediate prediction errors, and wherein each pre-intermediate 3D joint and corresponding intermediate prediction error facilitates calculating a corresponding loss function for training the transformer based neural network architecture.

In an embodiment of the present invention, the intermediate supervision block includes a first linear layer for reducing a dimension of each pre-intermediate joint to generate corresponding pre-intermediate 3D joint; a second linear layer for generating corresponding plurality of prediction errors based on corresponding plurality of pre-intermediate joints; a third linear layer for increasing a dimension of each pre-intermediate 3D joint; and a summation block for adding the outputs of the transformer encoder and the third linear layer, and providing the added output to a next transformer encoder.

In an embodiment of the present invention, the loss term for a pre-intermediate 3D joint includes a 3D prediction loss term and an error loss term, wherein the 3D prediction loss term is estimated based on a mean-squared error between the pre-intermediate 3D joint and corresponding ground-truth joint, and wherein for the error loss term, first a true error is defined as an absolute difference between the pre-intermediate 3D joint, and the ground-truth joint, and the error loss is calculated as a mean-squared error between corresponding prediction error and the true error.

In an embodiment of the present invention, the plurality of 2D joint positions is provided in image coordinates, and the 3D pose is estimated in camera coordinates and centered on the pelvis joint.

In an embodiment of the present invention, the setting a 2D joint position as a token enables the joint transformer to learn the correlations between joints.

In an embodiment of the present invention, the joint embedding mechanism employs a linear layer to embed each token into the increased dimension of the predefined value with weight sharing between each joint.

In an embodiment of the present invention, the refinement transformer includes a stack of two transformer encoders, and a linear layer following the stacked transformer encoders to predict the plurality of 3D joints.

In an embodiment of the present invention, each input to the refinement transformer is a 2D joint concatenated with corresponding intermediate 3D joint and prediction error.

In another aspect of the present invention, there is provided a computer implemented method for estimating a 3D pose from a 2D pose using a transformer based neural network architecture. The method includes receiving a plurality of 2D joint positions, setting each 2D joint position as a token, and increasing a dimension of each token to a predefined higher dimension, predicting a plurality of intermediate 3D joints, and a corresponding plurality of prediction errors, from corresponding plurality of tokens of the increased dimension, and estimating a plurality of final 3D joints based on the plurality of intermediate 3D joints, and corresponding plurality of prediction errors, wherein the plurality of final 3D joints is concatenated to generate the 3D pose.

There is provided a computer program comprising program instructions for causing a computer program to carry out the above method which may be embodied on a record medium, carrier signal or read-only memory.

Various embodiments of the present invention disclose a transformer-based neural network architecture for single frame 3D pose uplifting, based on error prediction and intermediate supervision techniques. The self-attention operator of the transformer-based neural network architecture generalises the feed-forward layer to be dynamic to the input, and the relationship between joints can be learned rather than manually encoded. Such transformer-based neural network architecture is smaller and faster than previous state of the art techniques for single frame 3D pose estimation.

Further, very few studies had applied transformers to the task of 3D human pose estimation to date. Existing works have either used a direct estimation approach or focused their studies on video-based 2D-3D lifting. The transformer-based neural network architecture is a novel architecture for 3D pose estimation to analyse the previously-unexplored performance of transformers on single images. It is demonstrated that implicitly encoding kinematic joint structure allows for a robust learning framework that outperforms the state of the art on established benchmarks. While the current approach addresses only single-frame input, it may be used as a modular component of temporal or multi-frame architectures in subsequent research.

**BRIEF DESCRIPTION OF DRAWINGS**

The invention will be more clearly understood from the following description of an embodiment thereof, given by way of example only, with reference to the accompanying drawings, in which:-

FIG.1A illustrates a transformer based neural network architecture for 3D human pose estimation, in accordance with an embodiment of the present invention;
FIG.1B illustrates the joint transformer of FIG.1A;
FIG.2 illustrates a transformer layer of the joint transformer;
FIG.3 is a table that discusses ablation study of the neural network architecture of FIG.1A with quantitative results on an exemplary dataset; and
FIG.4 is a flowchart illustrating a method for 3D pose estimation, in accordance with an embodiment of the present invention.

**DETAILED DESCRIPTION OF THE DRAWINGS**

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. a memory stick or hard disk. The carrier may be an electrical or optical signal which may be transmitted via an electrical or an optical cable or by radio or other means.

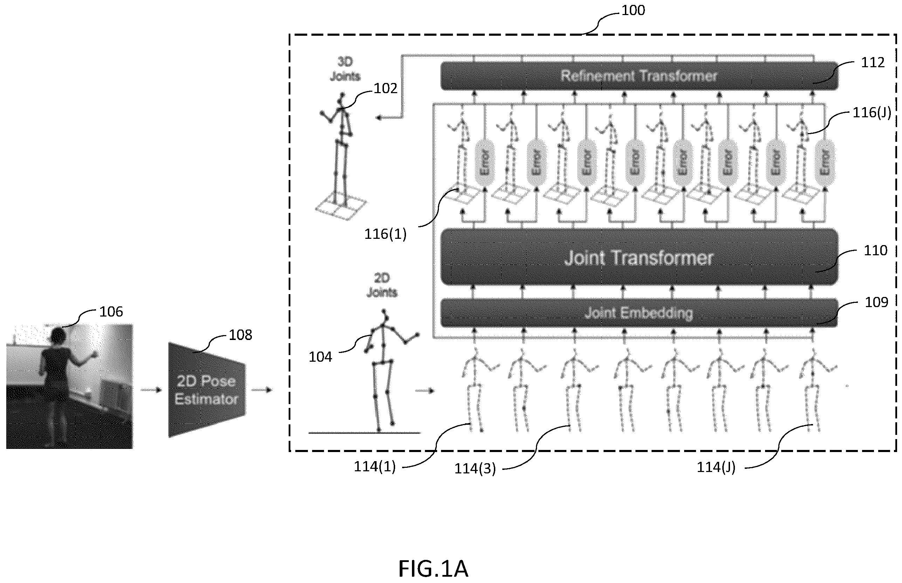

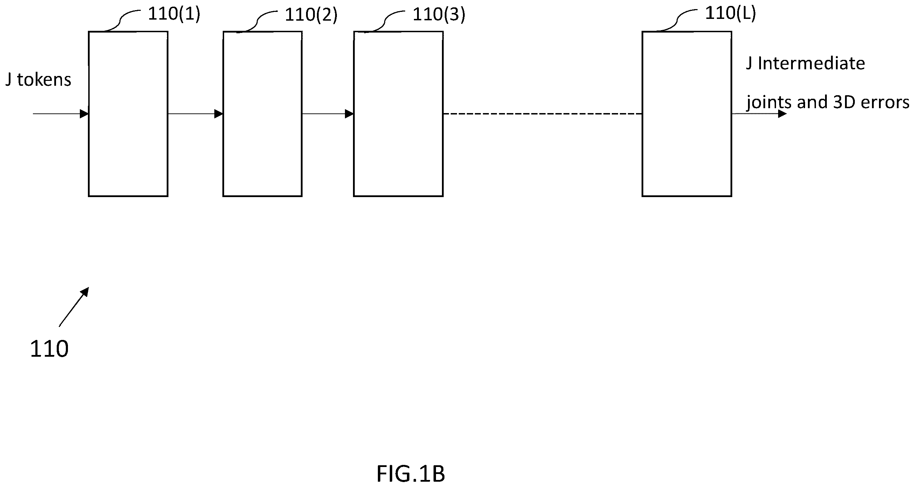

FIG.1 illustrates a transformer based neural network architecture 100 for estimating a 3D human pose 102 from a 2D human pose 104 using a GPU, in accordance with an embodiment of the present invention. The architecture 100 can be used in any application that uses 3D human pose, such as sports analysis or medical training. Throughout the present invention, the neural network architecture 100 is interchangeably referred to as architecture 100, neural network architecture 100, the network 100, and the like. In the context of the present invention, the neural network architecture 100 may be implemented in a server or another computer system, and implemented by way of a processor (e.g., a single or multiple processors) or other hardware described herein. These methods, functions and other processes may be embodied as machine-readable instructions stored on a computer-readable medium, which may be non-transitory, such as hardware storage devices (e.g., RAM (random access memory), ROM (read-only memory), EPROM (erasable, programmable ROM), EEPROM (electrically erasable, programmable ROM), hard drives, and flash memory).

The 2D human pose 104 may be estimated from an input image 106 using any available 2D pose estimator 108 which shows where in the image, the human is located. It would be apparent to one of ordinary skill in the art, that any known 2D pose estimator 108 may be used for 2D pose estimation herein. Further, the neural network architecture 100 may be hereinafter referred to as a joint-former, as it uses a transformer based architecture to estimate a plurality of 3D joints of human pose. In an embodiment of the present invention, the input to the architecture 100 is 2D joint positions of a human skeleton in normalized image coordinates, and the output is a 3D human pose 102 estimated in camera coordinates and centered on the pelvis joint.

The neural network architecture 100 includes a joint embedding mechanism 109 for receiving a set of J 2D joint coordinates x of the 2D pose 104, where the 2D joint coordinates are represented by the reference numerals 114(1), 114(2) till 114(J). The joint embedding mechanism 109 consider each joint 114(1) till 114(J) as a token which allows the joint transformer 110 to apply cross-attention on them. This helps the network 100 to learn the correlations between joints, which benefits the prediction. The joint embeddisng mechanism 109 embeds each token into a higher dimension of size c. Thus, the dimension of each token is changed from '2' to 'c'. The embedding function may be represented by the following equation:

$$f_{embed}(\mathbf{x}) : \mathbb{R}^{J \times 2} \to \mathbb{R}^{J \times c} \quad \dots\dots\dots\dots\dots\dots\dots\dots\dots\dots\dots(1)$$

where, R represents a set of J tokens, each of dimension 'c'. The tokens may be interchangeably referred to as joints.

Thus, the 2D input pose coordinates are expanded to the hidden dimension of the network 100. The hidden dimension is the dimension of the feature space of the transformer 110. The joint embedding mechanism employs a linear layer that expands the 2D coordinates to the hidden dimension individually for each joint with weight sharing between each joint. Since the embedding weights are shared for each joint, the linear layer can focus on finding the best way to expand the 2D coordinates regardless of the location of the joint.

Traditionally in transformers, the embedding is followed by a positional encoding. In the context of the present invention, the order of joints is not changed, implicitly encoding the position in the input itself (i.e. the first joint in the input is always the hip joint).

The neural network architecture 100 further includes a joint transformer 110 for receiving the embedded J tokens and estimating J intermediate 3D joints 116(1) till 116(J), and corresponding prediction errors, and a Refinement Transformer 112 for generating J final 3D joints based on the J intermediate 3D joints 116(1) till 116(J), and prediction errors. The J final 3D joints can be concatenated to form the output 3D pose 102. This novel combination of joint and refinement transformers 110 and 112 allows to achieve state-of-the-art performance in a single frame 3D pose estimation.

FIG.1B illustrates the joint transformer 110 that includes L number of transformer layers 110(1) till 110(L) connected in series. The first transformer layer 110(1) receives the set of embedded tokens from the joint embedding mechanism 109, and the Lth transformer layer 110(L) outputs J intermediate 3D joints 116(1) till 116(J) and corresponding prediction errors.

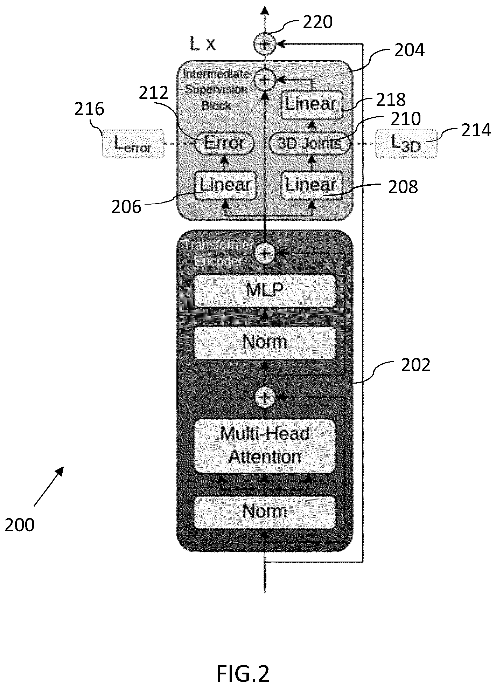

FIG.2 illustrates a typical transformer layer 200 of the joint transformer 110 similar to the transformer layers 110(1),110(2)...110(L). The transformer layer 200 includes a transformer encoder 202 and an intermediate supervision block 204 connected in series. When the transformer layer 200 is the first layer, the transformer encoder 202 receives J embedded tokens, apply self-attention to share information across each joint, and outputs J first pre-intermediate joints. Similarly, when the transformer layer 200 is the second layer, the transformer encoder 202 receives J first pre-intermediate tokens, apply self-attention to share information across each joint, and outputs J second pre-intermediate joints, and so on. Self-attention, sometimes called intra-attention is an attention mechanism relating different positions of a single sequence in order to compute a representation of the sequence. The first and second pre-intermediate joints are of a higher dimension (for example, c) similar to the dimension of feature space of the transformer encoder 202.

The intermediate supervision block 204 includes first and second linear layers 206 and 208 for predicting J pre-intermediate 3D joints 210, and corresponding intermediate prediction 3D errors 212 from the J pre-intermediate joints outputted by the transformer encoder 202. The output of the transformer encoder 202 is of higher dimension than 3, and thus the first and second linear layers 206 and 208 map the output of transformer encoder 202 to 3D space.

The pre-intermediate 3D joints 210 may be represented by the following function:

$$f_{pred}(\mathbf{z}) : \mathbb{R}^{J \times c} \to \mathbb{R}^{J \times 3} \quad \dots\dots\dots\dots\dots\dots\dots\dots(2)$$

It can be seen from the above function, that the first linear layer 208 reduces the dimension of output of the transformer encoder 202 from 'c' to '3'.

Further, the intermediate prediction 3D error is given by the following function:

$$f_{error}(\mathbf{z}) : \mathbb{R}^{J \times c} \to \mathbb{R}^{J \times 3}. \quad \dots\dots\dots\dots\dots\dots\dots(3)$$

In accordance with an embodiment of the present invention, each pre-intermediate 3D joint 210 and corresponding intermediate prediction error 212 may be used for estimating loss terms during training of the network 100. The loss terms are essentially indicative of difference between predicted values and known-values, and therefore play a significant role in training the network 100. The loss term for the pre-intermediate 3D joint 210 includes a 3D prediction loss term $L_{3D}$ 214 and an error loss $L_{error}$ term 216.

In an embodiment of the present invention, the 3D prediction loss term $L_{3D}$ 214 may be estimated based on the mean-squared error between the pre-intermediate 3D joint y 210 and corresponding ground-truth joint $\hat{y}$. For the error loss $L_{error}$, first the true error $\hat{e}$ is defined as the absolute difference between the predicted and the ground-truth joints $\hat{e} = |y - \hat{y}|$. Then, the mean-squared error between the intermediate prediction error e and the true error $\hat{e}$ is calculated as the error loss.

The combined loss for all the transformer layers 110(1), 110(2)...110(L), based on the error loss and the predicted 3D loss for each layer, can be given by the following equation:

$$\mathcal{L}_{combined} = \frac{1}{L} \sum_{i=1}^{L} \frac{\mathcal{L}_{3D}^{i} + \mathcal{L}_{error}^{i}}{2}; \quad \dots\dots\dots\dots\dots\dots(4)$$

where L is the number of transformer encoders in the stack.

In an embodiment of the present invention, one training iteration of the network 100 may consist of passing a batch of data e.g 64 samples of 2D poses into the network 100. This outputs predictions for each sample at each intermediate supervision block, where a loss term is calculated for each prediction and the losses are summed. Based on the summed loss, the weights of the network may be continually adjusted during training phase, to continually minimise the summed loss.

The intermediate supervision block 204 further includes a third linear layer 218 for embedding the pre intermediate 3D joints 210 back to the hidden dimension of the transformer encoder 202, and a summation block 220 for adding an output of the linear layer 218 with the output of the transformer encoder 202, to generate next pre-intermediate joints $L_x$ that have a dimensionality similar to the hidden dimension of the transformer. The output $L_x$ may be then provided as an input to the next transformer layer (not shown).

Thus, after each transformer encoder in the stack, a pre-intermediate prediction is made (for example, predicted 3D joints 210) based on which a loss can be predicted. This increases the performance of the network 100 as the knowledge about the intermediate 3D positions can be used to refine the predictions in subsequent layers. Additionally, after each transformer encoder, an intermediate prediction error (for example, intermediate prediction error 212) is made. Here, the network 100 predicts its own error, giving it the ability to model its own confidence in the predictions. Therefore, predictions with low confidence can be refined in later stages during the training of the network 100.

By design, the transformer encoders share information between tokens and learns which tokens are important for prediction. This gives even the first transformer encoder the ability to learn how joint tokens interact and to predict the 3D joints. The intermediate supervision is the practice of using additional loss terms at various stages of deep neural networks to improve performance. Thus, the loss is not computed at the end of the architecture 100, but the loss term is computed after each individual transformer encoder in the stack. This allows the network 100 to learn initial estimates that may get further refined by each transformer encoder in the stack. Subsequent transformer encoders may pass down highly discriminative features from previous encoders and can focus on increasingly fine-grained features to refine previous estimates.

Further, the prediction error provides an estimate of the confidence in its prediction, giving the network the ability to compensate. It is being observed that the addition of the prediction error stabilizes the training and leads to better overall results. It can also serve as important additional information when visualizing the pose or for practical application of the technology.

In an example, when the number of transformer encoders is equal to L, the output of each encoder is $z_L \in R^{J \times c}$. The output of the last encoder of the encoder stack is regressed to predict J intermediate 3D joints, using an MLP block consisting of layer normalization, dropout and a single linear layer.

The refinement transformer 112 is configured to make further use of the prediction error and boost the accuracy of the pose prediction. The input to the refinement transformer 112 is the original 2D pose concatenated to the intermediate 3D joints 116(1) till 116(L) and corresponding prediction errors. The refinement transformer 112 is similar to the joint transformer 110 with the following difference, the refinement transformer 112 only stacks two transformer encoders with a hidden dimension of 256, and does not include an intermediate supervision block. As with the joint transformer 110, the refinement transformer 112 tokenizes each joint and uses a 1D convolution to embed the 8-channel input to the hidden dimension. The refinement transformer 112 further includes a linear layer to predict the final 3D joints, which are concatenated to generate the single 3D pose 102.

The performance of the proposed model has been compared with recent state-of-the-art methods for single-frame 3D human pose estimation across two exemplary datasets. Both direct estimation and 2D-3D lifting methods has been used in the analysis. Existing lifting methods use either multilayer perceptron or graph convolutional models to map from 2D to 3D. In contrast, the Joint Transformer uses a transformer architecture with intermediate supervision, error prediction and refinement. The performance of the present invention is further compared with a "Base Transformer" architecture that consists of a linear embedding, spatial positional encoding and transformer encoder blocks.

In a first comparison, the 2D predictions of a 2D pose detector are taken as input. The joint transformer of the present invention outperforms the state-of-the-art approaches by more than 1:4 mm. The addition of the Refinement Transformer decreases the error a further 0:4 mm for a total improvement of 1:8 mm. The Joint Transformer also outperforms the Baseline Transformer without intermediate supervision, error prediction and with linear pose embedding by more than 3 mm.

In a second comparison, when ground truth 2D joint positions passed as input, it is found out that the Joint Transformer surpasses the state of the art by 1:8 mm. The Refinement Transformer does not further decrease the prediction error, and in fact, the performance of the Refinement Transformer seems correlated to the magnitude of the error prediction of the Joint Transformer. In the case of the ground-truth 2D inputs, the prediction error is quite small, whilst the larger magnitude of the error prediction for the CPN key points can be effectively used by the Refinement Transformer to achieve a better prediction.

In a third comparison, the joint transformer that is trained on a given dataset has been evaluated on a test dataset without any additional training. The joint transformer outperforms the previous state of the art, even though some previous methods use additional training data. Also, the refinement transformer further enhances the results by an additional small margin. This shows the ability of the present method to generalise to unseen datasets.

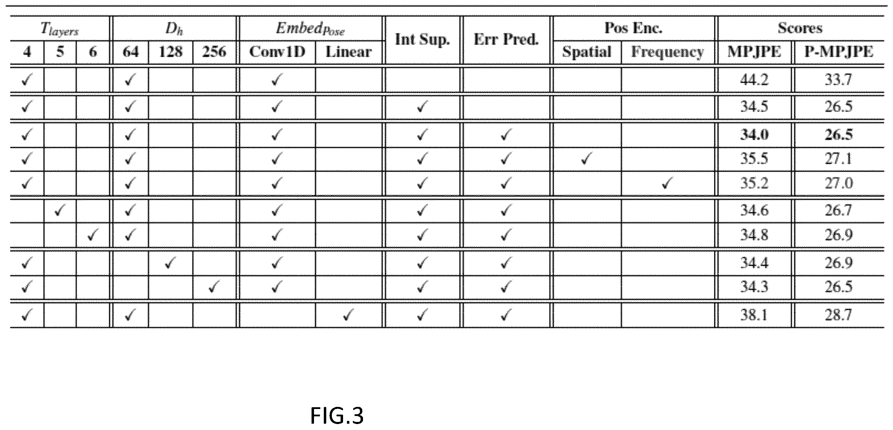

FIG.3 illustrates a table that discusses ablation study with quantitative results on an exemplary dataset. As input, GT key points are being used. The purpose of the ablation study is to investigate the effects of the number of transformer layers ($T_{layers}$), size of the encoder ($D_h$), type of pose embedding used ($Embed_{Pose}$), intermediate supervision (Int sup), error prediction ($Err_{Pred}$) and positional encoding ($Pos_{Enc}$). All reported errors are the average of 3 training runs. A basic joint former is formed with $T_{layers}$ (number of encoder layers) = 4, $D_h$ = 64, and *Embed_{Pose}* = Conv1D (first row) and then next intermediate supervision (second row), error prediction (third row) and positional encoding (fourth and fifth row) are added. The improvements are noticed with intermediate supervision and error prediction, but positional encoding negatively impacts results. In the upper part of the table, it is observed that by adding the intermediate supervision, the performance can be drastically improved. Since the order of the joints never changes, their positions are already implicitly encoded and further addition of an explicit encoding seems to confuse the network somewhat. This is the case for both the frequency based positional encoding, as well as the spatial encoding. In the lower part of the table, the effect is shown for a different number of transformer encoders and size of the hidden dimension. It is shown that the highest performance and most stable training can be achieved by using 4 layers and a hidden dimension of 64. While a larger number in either of these parameters increases the capacity of the network, the larger capacity seems not to be needed for best results. Finally, it can also be observed that using a 1D convolution to embed the 2D inputs to the hidden dimension instead of a linear layer not only saves some network parameters, but also leads to better performance.

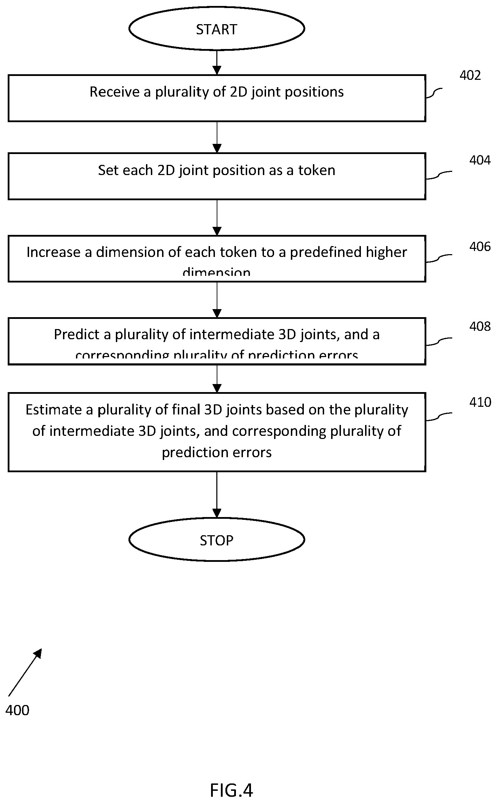

FIG.4 is a flowchart illustrating a method 400 for 3D pose estimation, in accordance with an embodiment of the present invention. It is to be noted, that the method 400 may be implemented using the transformer based neural network architecture of FIGs.1A, 1B and 2.

At step 402, a plurality of 2D joint positions is received, and at step 404, each 2D joint position is set as a token. At step 406, a dimension of each token is increased to a predefined higher dimension. At step 408, a plurality of intermediate 3D joints, and a corresponding plurality of prediction errors is predicted, from corresponding plurality of tokens of the increased dimension. At step 410, a plurality of final 3D joints is estimated based on the plurality of intermediate 3D joints, and corresponding plurality of prediction errors, wherein the plurality of final 3D joints is concatenated to generate the 3D pose.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

**Claims**

1.  A transformer based neural network architecture for estimating a 3D pose from a 2D pose, comprising:

    a joint embedding mechanism for receiving a plurality of 2D joint positions, setting each 2D joint position as a token, and increasing a dimension of each token to a predefined higher dimension;
    a joint transformer communicatively coupled to the joint embedding mechanism, for predicting a plurality of intermediate 3D joints, and a corresponding plurality of prediction errors, from corresponding plurality of tokens of the increased dimension; and
    a refinement transformer for estimating a plurality of final 3D joints based on the plurality of intermediate 3D joints, and corresponding plurality of prediction errors, wherein the plurality of final 3D joints is concatenated to generate the 3D pose.

2.  The transformer based neural network architecture as claimed in claim 1, wherein the joint transformer comprises a plurality of transformer layers connected in series, and each transformer layer comprises: a transformer encoder for generating a plurality of pre-intermediate joints, and an intermediate supervision block connected in series with the transformer encoder for generating a plurality of pre-intermediate 3D joints, and corresponding plurality of intermediate prediction errors, and wherein each pre-intermediate 3D joint and corresponding intermediate prediction error facilitates calculating a corresponding loss function for training the transformer based neural network architecture.

3.  The transformer based neural network architecture as claimed in claim 2, wherein the intermediate supervision block comprises:

    a first linear layer for reducing a dimension of each pre-intermediate joint to generate corresponding pre-intermediate 3D joint;
    a second linear layer for generating corresponding plurality of intermediate prediction errors based on corresponding plurality of pre-intermediate joints;
    a third linear layer for increasing a dimension of each pre-intermediate 3D joint; and
    a summation block for adding the outputs of the transformer encoder and the third linear layer, and providing the added output to a next transformer encoder.

4.  The transformer based neural network architecture as claimed in any preceding claim wherein the loss term for a pre-intermediate 3D joint includes a 3D prediction loss term and an error loss term, wherein the 3D prediction loss term is estimated based on a mean-squared error between the pre-intermediate 3D joint and corresponding ground-truth joint, and wherein for the error loss term, first a true error is defined as an absolute difference between the pre-intermediate 3D joint, and the ground-truth joint, and the error loss is calculated as a mean-squared error between corresponding prediction error and the true error.

5.  The transformer based neural network architecture as claimed in any preceding claim, wherein the plurality of 2D joint positions is provided in image coordinates, and the 3D pose is estimated in camera coordinates and centered on the pelvis joint.

**6.** The transformer based neural network architecture as claimed in any preceding claim, wherein the setting a 2D joint position as a token enables the joint transformer to learn the correlations between joints.

**7.** The transformer based neural network architecture as claimed in any preceding claim, wherein the joint embedding mechanism employs a linear layer to embed each token into the increased dimension of the predefined value with weight sharing between each joint.

**8.** The transformer based neural network architecture as claimed in any preceding claim, wherein the refinement transformer includes a stack of two transformer encoders, and a linear layer following the stacked transformer encoders to predict the plurality of 3D joints.

**9.** The transformer based neural network architecture as claimed in any preceding claim, wherein each input to the refinement transformer is a 2D joint concatenated with corresponding intermediate 3D joint and prediction error.

**10.** A computer implemented method for estimating a 3D pose from a 2D pose using a transformer based neural network architecture, the method comprising:

receiving a plurality of 2D joint positions;
setting each 2D joint position as a token;
increasing a dimension of each token to a predefined higher dimension;
predicting a plurality of intermediate 3D joints, and a corresponding plurality of prediction errors, from corresponding plurality of tokens of the increased dimension; and
estimating a plurality of final 3D joints based on the plurality of intermediate 3D joints, and corresponding plurality of prediction errors, wherein the plurality of final 3D joints is concatenated to generate the 3D pose.

FIG.1A

EP 4 310 783 A1

110(1)  110(2)  110(3)  110(L)

J tokens

J Intermediate

joints and 3D errors

110

FIG.1B

FIG.2

EP 4 310 783 A1

| $T_{layers}$ | | | $D_h$ | | | $Embed_{pose}$ | | Int Sup. | Err Pred. | Pos Enc. | | Scores | |
|---|---|---|---|---|---|---|---|---|---|---|---|---|---|
| 4 | 5 | 6 | 64 | 128 | 256 | Conv1D | Linear | | | Spatial | Frequency | MPJPE | P-MPJPE |
| ✓ | | | ✓ | | | ✓ | | | | | | 44.2 | 33.7 |
| ✓ | | | ✓ | | | ✓ | | ✓ | | | | 34.5 | 26.5 |
| ✓ | | | ✓ | | | ✓ | | ✓ | ✓ | | | **34.0** | **26.5** |
| ✓ | | | ✓ | | | ✓ | | ✓ | ✓ | ✓ | | 35.5 | 27.1 |
| ✓ | | | ✓ | | | ✓ | | ✓ | ✓ | | ✓ | 35.2 | 27.0 |
| | ✓ | | ✓ | | | ✓ | | ✓ | ✓ | | | 34.6 | 26.7 |
| | | ✓ | ✓ | | | ✓ | | ✓ | ✓ | | | 34.8 | 26.9 |
| ✓ | | | | ✓ | | ✓ | | ✓ | ✓ | | | 34.4 | 26.9 |
| ✓ | | | | | ✓ | ✓ | | ✓ | ✓ | | | 34.3 | 26.5 |
| ✓ | | | ✓ | | | | ✓ | ✓ | ✓ | | | 38.1 | 28.7 |

FIG.3

START

Receive a plurality of 2D joint positions — 402

Set each 2D joint position as a token — 404

Increase a dimension of each token to a predefined higher dimension — 406

Predict a plurality of intermediate 3D joints, and a corresponding plurality of prediction errors — 408

Estimate a plurality of final 3D joints based on the plurality of intermediate 3D joints, and corresponding plurality of prediction errors — 410

STOP

400

FIG.4

Europäisches
Patentamt

European
Patent Office

Office européen
des brevets

## EUROPEAN SEARCH REPORT

Application Number

EP 22 18 6307

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JINLU ZHANG ET AL: "MixSTE: Seq2seq Mixed Spatio-Temporal Encoder for 3D Human Pose Estimation in Video", ARXIV.ORG, CORNELL UNIVERSITY LIBRARY, 201 OLIN LIBRARY CORNELL UNIVERSITY ITHACA, NY 14853, 2 March 2022 (2022-03-02), XP091175672, | 1,5-10 | INV. G06T7/50 G06T7/73 |
| A | * page 1 - page 5 *<br>----- | 2-4 | |
| A | CE ZHENG ET AL: "3D Human Pose Estimation with Spatial and Temporal Transformers", ARXIV.ORG, CORNELL UNIVERSITY LIBRARY, 201 OLIN LIBRARY CORNELL UNIVERSITY ITHACA, NY 14853, 22 August 2021 (2021-08-22), XP091024130, * third page to fifth page *<br>----- | 1-10 | |
| A | WENHAO LI ET AL: "Exploiting Temporal Contexts with Strided Transformer for 3D Human Pose Estimation", ARXIV.ORG, CORNELL UNIVERSITY LIBRARY, 201 OLIN LIBRARY CORNELL UNIVERSITY ITHACA, NY 14853, 11 January 2022 (2022-01-11), XP091124841, * page 1 - page 5 *<br>----- | 1-10 | TECHNICAL FIELDS SEARCHED (IPC)<br><br>G06T |

The present search report has been drawn up for all claims

| Place of search | Date of completion of the search | Examiner |
|---|---|---|
| Munich | 12 January 2023 | Maier, Werner |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................
& : member of the same patent family, corresponding
document

EPO FORM 1503 03.82 (P04C01)